# EUROPEAN PATENT SPECIFICATION

(11) **EP 1 653 210 B1**
(45) Date of publication and mention of the grant of the patent: **16.12.2009**
(21) Application number: 05021631.6
(22) Date of filing: 04.10.2005
(51) Int. Cl.: G01M 1/32, G01M 1/02

(54) **Apparatus for positioning counterweights on a vehicle wheel mounted on a balancing machine**
Vorrichtung zum Anbringen von Ausgleichsgewichten an einem auf einer Auswuchtmaschine befestigten Rad
Appareil de positionnement de poids d'équilibrage sur une roue montée sur une machine d'équilibrage

(30) Priority: 28.10.2004 IT MI20042057
(43) Date of publication of application: 03.05.2006
(73) Proprietor: Buzzi, Carlo, 23826 Mandello del Lario (Lecco) (IT)
(72) Inventor: Buzzi, Carlo, 23826 Mandello del Lario (Lecco) (IT)
(74) Representative: Alagem Modiano, Lara S.

(56) References cited:
- EP-A- 1 617 198
- EP-A2- 0 694 775
- DE-A1- 4 229 865
- DE-C2- 4 143 623

## Description

The present invention relates to an apparatus for positioning counterweights on a generic vehicle wheel mounted on a balancing machine.

As is known, the method for correcting the imbalance of a motor vehicle wheel mounted on a balancing machine requires the addition of one or more, generally two, counterweights, which must be added and coupled stably to such wheel.

The position where the counterweights are to be applied to the wheel must be identified by two distinct elements, i.e., the correction plane and the correction angle.

Correction planes are defined as those planes, at right angles to the axis of rotation of the wheel, that are selected by the operator and intersect the wheel in all the possible regions where a balancing counterweight can be inserted.

The correction angle is obtained by the balancing machine and refers to a pointer of the balancing machine proper and to the position, within the correction plane, where the counterweight is to be inserted.

The operations performed on a balancing machine normally consist in determining the correction planes, entering in the measurement instrument the positions related to the planes with respect to the balancing machine, obtaining the results in terms of value and angular position of the imbalance, and applying the counterweight at the correct angle on the corresponding correction plane determined earlier. The balancing machine, by known methods, in fact calculates precisely the value of the counterweights that must be arranged on the set planes.

The operations for measuring the position of the correction planes must be performed before balancing and after balancing, so as to be able to determine precisely the plane where the counterweight is to be applied. This is the case in particular when the correction is to be performed by means of adhesive counterweights on the inside of a wheel rim, in this case the position where the counterweight is to be applied is generally not already preset and therefore finding precisely the set correction plane is not easy.

To select the correction planes, it is convenient to use the same gauge used to measure the correction planes, such gauge being connected to the instruments in which the position of the planes, obtained previously, is stored.

In this manner, the operator can easily place the balancing counterweight exactly on the correction plane on which the instruments have calculated the imbalances; this is very important, since an incorrect placement of the counterweight can cause the correction of the imbalance to be imprecise or incorrect.

In order to solve the problems described above, devices are already known, for example of the type disclosed in patent EP586856, in which there is a measurement gauge with a locking system obtained by braking the cable or belt to which the gauge is connected.

This embodiment is particularly complicated from a mechanical standpoint and moreover, the cable can be damaged.

Moreover, another problem consists in that the motion of the gauge can be stopped only in one direction, thus causing positioning operations to be more time-consuming.

Balancing machines that have measurement gauges with locking systems are also known from EP 1617 198 A2 and DE 42 29 865 A1.

The aim of the invention is to solve the problems described above by providing an apparatus for positioning counterweights on a generic vehicle wheel, mounted on a balancing machine, which allows to provide a system for locking in position the rod of the position repeating gauge in a manner that is extremely simple from a structural standpoint and is further particularly valid from a functional standpoint.

Within this aim, an object of the invention is to provide an apparatus that allows to lock the movement of the gauge during both directions of motion, achieving stable and effective locking.

Another object of the present invention is to provide an apparatus that thanks to its particular constructive characteristics is capable of giving the greatest assurances of reliability and safety in use.

Another object of the present invention is to provide an apparatus that can be easily obtained starting from commonly commercially available elements and materials and is also competitive from a merely economical standpoint.

This aim and these and other objects that will become better apparent hereinafter are achieved by an apparatus for positioning counterweights on a generic vehicle wheel mounted on a balancing machine, according to the invention, having the features set forth in claim 1.

Further characteristics and advantages of the present invention will become better apparent from the description of a preferred but not exclusive embodiment of a balancing machine for positioning counterweights on a generic vehicle wheel, illustrated by way of non-limiting example in the accompanying drawings, wherein:

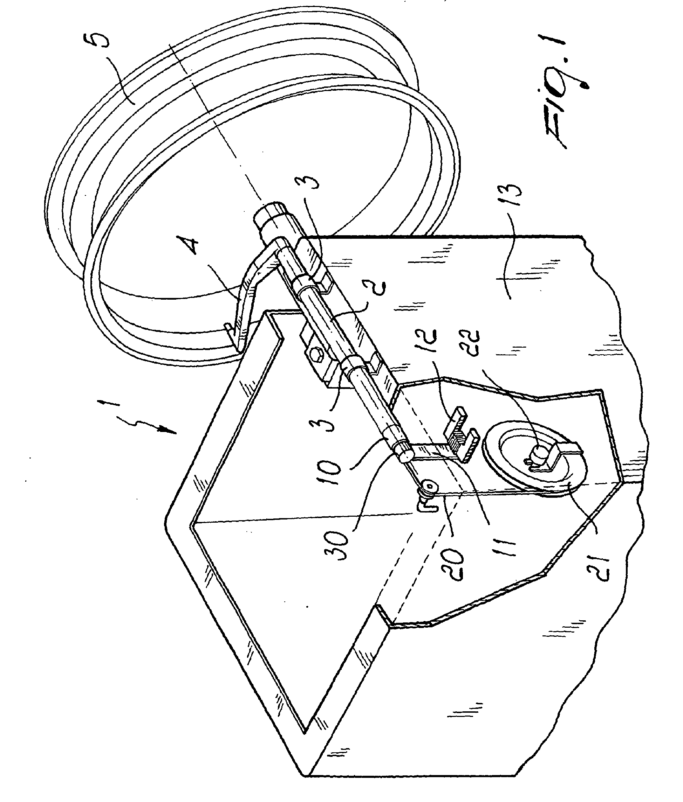

Figure 1 is a schematic view of the apparatus according to the invention in the initial position;

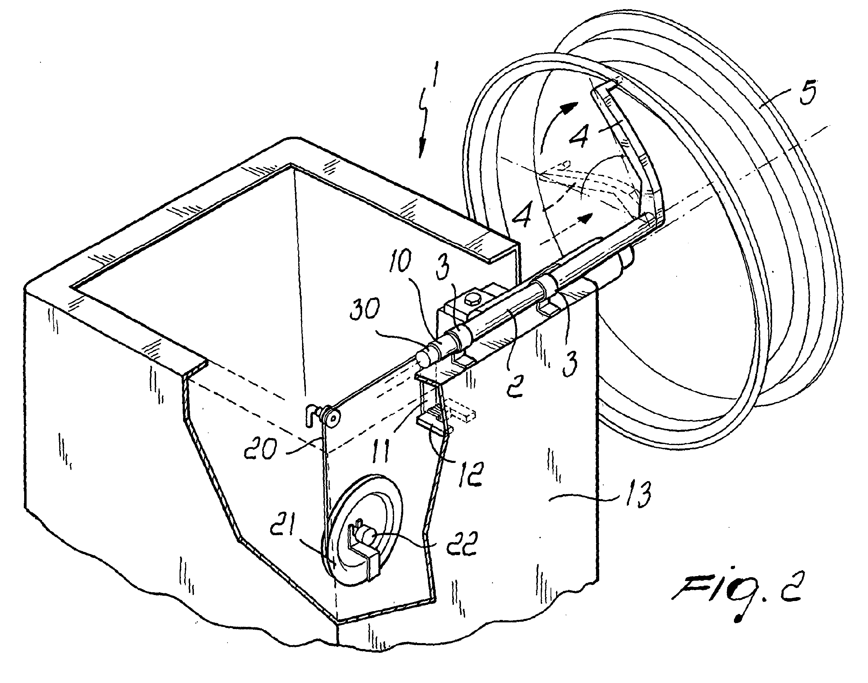

Figure 2 is a view of the step for positioning the pointer that identifies the correction planes.

With reference to the figures, the apparatus for positioning counterweights on a generic vehicle wheel mounted on a balancing machine, generally designated by the reference numeral 1, comprises a rod 2, which can perform a translational motion in a linear fashion by way of movement means, which are per se known and are not illustrated in the drawing, and is guided by bushes 3 connected to the framework of the apparatus.

A pointer 4 is connected to one end of the rod 2 and is constituted by an arm, which can be arranged within a wheel rim, generally designated by the reference numeral 5.

A rotating bush 10 is connected to the other end of the rod 2 and is connected to a counterweight lever 11, whereto the means for locking the linear movement of the rod are connected, such means being provided advantageously by means of an electromagnet 12, which slidingly engages an abutment surface 13 made of ferromagnetic material.

Thanks to the weight of the counterweight lever 11 and of the electromagnet 12, the electromagnet remains in contact with the surface 13, which is substantially parallel to the rod 2.

The friction of said sliding is normally low and instead becomes very substantial when the electromagnet is activated electrically and therefore the movable rod is locked instantly in a preset position following an impulse of the measurement instruments.

The movable rod 2 is connected, by means of a cable 20, to linear position sensing means, which are constituted by a roller 21 around which the cable 11 winds, said cable being connected to a potentiometer or other sensor, designated by the reference numeral 22.

The movable rod 2 is connected to means for rotating about its own axis, which are per se known and not shown in the drawing, and can also support, as shown in the drawings, an angular sensor, constituted for example by a potentiometer 30 or other type of sensor, which is functionally associated with the rod 2 at the end that is not engaged by the pointer 4.

The potentiometer 30 is supported by the lever that supports the counterweight and the electromagnet 12, and therefore the rotation of the lever about the rod by means of the bush 10 is sensed and the potentiometer can measure the angle of the rotation of the rod about its own axis, allowing to measure the angular position of the pointer 4.

It is thus possible to obtain the measurement of the diameter of the wheel rim, by correlating with simple trigonometric relations the angle of the pointer, the relative fixed position of the rotation axes of the balancing machine and of the rod, and the diameter of the wheel rim.

From what has been described above, it is therefore evident that the invention achieves the proposed aim and objects, and in particular the fact is stressed that an apparatus is provided which, by way of extremely simple means, can perform rapidly the positioning of one or more counterweights on a wheel mounted on a balancing machine, thanks to the fact that the linear movement of the rod is locked by using an electromagnet, which is functionally very effective and structurally very simple.

The invention thus conceived is susceptible of numerous modifications and variations, all of which are within the scope of the appended claims.

All the details may further be replaced with other technically equivalent elements.

In practice, the materials used, as well as the contingent shapes and the dimensions, may be any according to requirements.

The disclosures in Italian Patent Application no. MI2004A002057, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for positioning counterweights on a generic vehicle wheel mounted on a balancing machine, comprising a rod (2) which can perform a translational motion substantially parallel to the rotation axis of a balancing machine (1) and is connected to linear position sensing means (21) functionally associated with the instruments of said balancing machine, which is provided with means for storing the reached positions, a pointer (4) being associated with said rod (2) and being insertable in a wheel rim (5) in order to identify the correction planes, and means for locking the linear movement of said rod, said linear movement locking means comprising an electromagnet (12) **characterized in that** said electromagnet can slidingly engage an abutment surface (13) made of ferromagnetic material and that said electromagnet can be activated electrically in order to lock said rod (2) in position, said electromagnet (12) being supported by a counterweight lever (11), which is connected rotatably to said rod (2) by means of a rotating bush (10).

2. The apparatus according to claim 1, **characterized in that** said abutment surface (13) is parallel to said rod (2), said electromagnet (12) slidingly engaging said abutment surface (13) being in friction sliding contact therewith, by virtue of the weight of said counterweight lever (11).

3. The apparatus according to the preceding claims, **characterized in that** it comprises means (30) for sensing the angular position of said pointer (4).

4. The apparatus according to claim 3, **characterized in that** said means for sensing the angular position are constituted by an angular sensor (30) associated with said rod (2).

5. The apparatus according to claims 3 or 4, **characterized in that** said angular sensing means comprise a potentiometer (30) which is supported by said counterweight lever (11) and interacts with said rod (2).

6. The apparatus according to one or more of the preceding claims, **characterized in that** said linear position sensing means comprise a roller (21) around which a cable (20) connected to said rod (2) winds, a sensor (22) being connected to said roller (21).

## Patentansprüche

1. Vorrichtung zum Positionieren von Gegengewichten an einem an einer Auswuchtmaschine montierten allgemeinen Fahrzeugrad, mit einer Stange (2), die eine translatorische Bewegung im Wesentlichen parallel zu der Drehachse einer Auswuchtmaschine (1) ausführen kann und mit Linearpositions-Erfassungsmitteln (21) verbunden ist, die den Instrumenten der Auswuchtmaschine funktional zugeordnet sind und mit Mitteln versehen sind, um die erreichten Positionen zu speichern, einem Zeiger (4), der der Stange (2) zugeordnet ist und in eine Radfelge (5) einsetzbar ist, um die Korrekturebenen zu identifizieren, und Mitteln zum Verriegeln der Linearbewegung der Stange, wobei die Linearbewegungs-Verriegelungsmittel einen Elektromagneten (12) enthalten, **dadurch gekennzeichnet, dass** der Elektromagnet mit einer Anschlagoberfläche (13), die aus ferromagnetischem Material hergestellt ist, in Gleiteingriff bringbar ist und dass der Elektromagnet elektrisch aktiviert werden kann, um die Stange (2) an ihrer Position zu verriegeln, wobei der Elektromagnet (12) durch einen Gegengewichtshebel (11) unterstützt ist, der mit der Stange (2) mittels einer Drehbuchse (10) drehbar verbunden ist.

2. Vorrichtung nach Anspruch 1, **dadurch gekennzeichnet, dass** die Anschlagoberfläche (13) zu der Stange (2) parallel ist, wobei der Elektromagnet (12), der mit der Anschlagoberfläche (13) in einem Gleitkontakt ist, mit dieser kraft des Gewichts des Gegengewichtshebels (11) in einem Reib-Gleitkontakt ist.

3. Vorrichtung nach den vorhergehenden Ansprüchen, **dadurch gekennzeichnet, dass** sie Mittel (30) enthält, um die Winkelposition des Zeigers (4) zu erfassen.

4. Vorrichtung nach Anspruch 3, **dadurch gekennzeichnet, dass** die Mittel zum Erfassen der Winkelposition durch einen Winkelsensor (30) gebildet sind, der der Stange (2) zugeordnet ist.

5. Vorrichtung nach Anspruch 3 oder 4, **dadurch gekennzeichnet, dass** die Winkelerfassungsmittel ein Potentiometer (30) enthalten, das durch den Gegengewichtshebel (11) unterstützt ist und mit der Stange (2) in Wechselwirkung ist.

6. Vorrichtung nach einem oder mehreren der vorhergehenden Ansprüche, **dadurch gekennzeichnet, dass** die Linearpositions-Erfassungsmittel eine Rolle (21) enthalten, um die ein mit der Stange (2) verbundenes Seil (20) gewunden ist, wobei der Sensor (22) mit der Rolle (21) verbunden ist.

## Revendications

1. Appareil de positionnement de masses d'équilibrage sur une roue générique de véhicule, montée sur une machine d'équilibrage, comprenant une tige (2), pouvant effectuer un déplacement en translation, sensiblement parallèlement à l'axe de rotation d'une machine d'équilibrage (1), et connectée à des moyens de détection de position linéaire (21), associés fonctionnellement aux instruments de ladite machine d'équilibrage, munie de moyens pour stocker en mémoire les positions atteintes, un pointeur (4) étant associé à ladite tige (2) et étant susceptible d'être inséré dans une jante de roue (5), de manière à identifier les plans de correction, et de moyens pour verrouiller le déplacement linéaire de ladite tige, lesdits moyens de verrouillage de déplacement linéaire comprenant un électroaimant (12), **caractérisé en ce que** ledit électroaimant peut venir en prise, par coulissement, avec une surface de butée (13) faite de matériau ferromagnétique, et **en ce que** ledit électroaimant peut être activé électriquement, de manière à verrouiller en position ladite tige (2), ledit électroaimant (12) étant supporté par un levier à masse d'équilibrage (11), connecté à rotation à ladite tige (2), au moyen d'une bague rotative (10).

2. Appareil selon la revendication 1, **caractérisé en ce que** ladite surface de butée (13) est parallèle à ladite tige (2), ledit électroaimant (12), venant en prise par coulissement avec ladite surface de butée (13), étant en contact de glissement accompagné de friction avec elle, du fait du poids dudit levier à masse d'équilibrage (11).

3. Appareil selon les revendications précédentes, **caractérisé en ce qu'**il comprend des moyens (30) pour détecter la position angulaire dudit pointeur (4).

4. Appareil selon la revendication 3, **caractérisé en ce que** lesdits moyens pour détecter la position angulaire sont constitués d'un capteur angulaire (30) associé à ladite tige (2).

5. Appareil selon la revendication 3 ou 4, **caractérisé en ce que** lesdits moyens de détection angulaire comprennent un potentiomètre (30), supporté par ledit levier à masse d'équilibrage (11) et interagissant avec ladite tige (2).

6. Appareil selon une ou plusieurs des revendications précédentes, **caractérisé en ce que** lesdits moyens de détection de position linéaire comprennent un rouleau (21), autour duquel s'enroule un câble (20) connecté à ladite tige (2), un capteur (22) étant connecté audit rouleau (21).
